# EUROPÄISCHE PATENTSCHRIFT

(11) **EP 3 458 431 B1**
(45) Veröffentlichungstag und Bekanntmachung des Hinweises auf die Patenterteilung: **15.09.2021**
(21) Anmeldenummer: 17740363.1
(22) Anmeldetag: 10.07.2017
(51) Int. Cl.: C04B 41/87, F01D 5/28

(54) **VERFAHREN ZUR HERSTELLUNG EINES KERAMISCHEN HITZESCHILDES MIT REAKTIONSCOATING**
PROCESS FOR PRODUCING A CERAMIC HEAT SHIELDS HAVING A REACTION COATING
PROCÉDÉ DE FABRICATION D'UN ÉCRAN THERMIQUE CÉRAMIQUE À REVÊTEMENT DE RÉACTION

(30) Priorität: 14.07.2016 DE 102016212872
(43) Veröffentlichungstag der Anmeldung: 27.03.2019
(73) Patentinhaber: Siemens Energy Global GmbH & Co. KG, 81739 München (DE)
(72) Erfinder: LANGE, Friederike, 40885 Ratingen-Lintorf (DE); KRAUSZ, Ivo, 12247 Berlin (DE); NIKASCH, Christian, 45478 Mülheim an der Ruhr (DE)
(86) Internationale Anmeldenummer: PCT/EP2017/067235
(87) Internationale Veröffentlichungsnummer: WO 2018/011126

(56) Entgegenhaltungen:
- DE-A1-102006 030 235
- US-A1- 2003 078 156

## Beschreibung

### Technisches Gebiet

Die Erfindung betrifft ein Verfahren zur Herstellung eines keramischen Hitzeschildes für eine Gasturbine.

### Technischer Hintergrund

Die beim Betrieb im Inneren von Gasturbinen entstehenden hohen Temperaturen werden durch entlang des Heißgaspfades angebrachte keramische Hitzeschilde abgeschirmt. Die keramischen Hitzeschilde zeigen während des Betriebseinsatzes Korrosion und Erosion auf ihrer dem Heißgas zugewandten Seite. Dieser Prozess geht auf die Korrosion des im keramischen Material enthaltenen Mullits zurück, der im Kontakt mit dem Heißgas zu sekundären Korund umgewandelt wird. Dieser sekundäre Korund wiederum hat eine geringere mechanische Festigkeit als das umgebende keramische Material und wird daher vom Heißgasstrom abgetragen. Dabei werden größere Gefügebestandteile freigelegt, bis sie sich schließlich aus der Oberfläche des keramischen Hitzeschildes herauslösen und von dem Heißgas fortgetragen werden. Die Partikel können an den Schutzbeschichtungen der Turbinenschaufeln (Thermal Barrier Coating - TBC) Schäden verursachen, was die Lebensdauer der Turbinenschaufeln herabsetzen kann.

Hierzu ist es bisher bekannt, die Heißgasseite der keramischen Hitzeschilde mit einer Aluminiumoxidbeschichtung auszustatten (DE 11 2008 003 399 B4). Aluminiumoxid ist deutlich heißgasstabiler als Mullit, zeigt aber im Kontakt mit Heißgas ebenfalls eine begrenzte Lebensdauer.

Die Aluminiumoxidbeschichtung kann durch ein Schlicker-Spray-Verfahren oder ein Flammspritzverfahren auf den Hitzeschild aufgetragen werden. Hierbei wird üblicherweise eine Beschichtung von etwa 300 Mikrometern Dicke aufgebracht. Eine durch Schlicker-Spray-Verfahren aufgebrachte Aluminiumoxidbeschichtung zeigt eine relativ feinkörnige Struktur, die beim Betrieb der Gasturbine zum Nachsintern, zu Rissbildung und frühzeitigen Absanden neigt. Wird hingegen ein Flammspritzverfahren verwendet, gerät die Beschichtung relativ dicht und spröde, weshalb sie den Deformationen des keramischen Hitzeschildes während des Betriebs der Gasturbine nicht folgen kann. Dies führt auch hier zu Rissbildung und fortschreitendem Ablösen der Beschichtung. Aus diesen Gründen ist die Lebensdauer solcher Aluminiumbeschichtungen auf etwa 8000 Betriebsstunden begrenzt, wobei bei Gasturbinen, die besonders hohe Heißgastemperaturen erreichen, von noch deutlich geringen Lebensdauern auszugehen ist. Die Beschichtung stellt selbst eine weitere Quelle von Partikeln mit den oben beschriebenen negativen Auswirkungen auf die Turbinenschaufeln dar und verlängert die Lebensdauer der keramischen Hitzeschilde nur unzureichend.

DE 10 2006 030 235 A1 offenbart ein Verfahren zum Korrosionsschutz von keramischen Oberflächen.

Die Erfindung macht es sich daher zur Aufgabe, keramische Hitzeschilde mit erhöhter Lebensdauer bereitzustellen.

### Zusammenfassung der Erfindung

Ein grundlegender Aspekt der Erfindung ist die Bereitstellung eines vorteilhaften keramischen Hitzeschildes zur Verwendung für eine Gasturbine. Der keramische Hitzeschild verfügt über einen aluminiumoxidhaltigen Keramikkörper. Dabei enthält eine Oberflächenschicht des Keramikkörpers Yttriumaluminiumgranat (YAG) als Reaktionscoatingmaterial. Unter einem Reaktionscoatingmaterial ist dabei ein Material zu verstehen, dass sich nach dem Aufbringen eines Reaktionscoatingbildners auf eine Oberfläche bzw. dem Beschichten einer Oberfläche mit einem Reaktionscoatingbildner, hier der Oberfläche des Keramickörpers, durch chemische Reaktion mit dem Material der Oberfläche bildet. Da zumindest ein Anteil des Reaktionscoatingbildners in die Oberfläche eindringt, entsteht eine das Reaktionscoatingmaterial enthaltende Oberflächenschicht.

Das Reaktionscoatingmaterial Yttriumaluminiumgranat ist von hoher Heißgasstabilität und schützt den aluminiumoxidhaltigen Keramikkörper vor dem Heißgasangriff. Für die Bildung des Yttriumaluminiumgranats kann ein yttriumhaltiger Reaktionscoatingbildner verwendet werden, der in den Keramikkörper durch Poren eindringt und nach der Reaktion des Reaktionscoatingbildners mit dem Aluminiumoxid zu YAG sämtliche vom Heißgas über die gleichen Wege erreichbaren Oberflächen des Hitzeschildes bedeckt und so besonders zuverlässig schützt. Eine Korrosion beziehungsweise Erosion des keramischen Materials des Keramikkörpers und damit des Hitzeschildes findet dadurch nicht mehr statt oder wird wenigstens stark eingeschränkt. Es lösen sich keine oder weniger keramische Partikel aus dem keramischen Hitzeschild, wodurch auch entsprechend weniger Beschädigungen der TBC-Schichten der Turbinenschaufeln verursacht werden.

Erfindungsgemäß ist vorgesehen, dass zur Bildung des Yttriumaluminiumgranats Yttriumnitrat als Reaktionscoatingbildner verwendet wird.

Vorzugsweise besteht ein Basismaterial des Keramikkörpers aus Aluminiumoxid, wobei unter dem Basismaterial das restliche Material des Keramikkörpers zu verstehen ist, welches nicht durch Yttriumaluminiumgranat gebildet ist. Ein geeignetes Basismaterial für den Keramikkörper stellt das von Siemens unter dem Namen "SiCerm E100" hergestellte Material dar.

Die Kombination vom Aluminiumoxid und YAG besitzt den besonderen Vorteil, dass die thermischen Ausdehnungskoeffizienten von Aluminiumoxid und YAG fast identisch sind. Je besser aber die thermischen Ausdehnungskoeffizienten des Reaktionscoatingmaterials und des Basismaterials des Keramikkörpers aufeinander abgestimmt sind, desto geringer wird die Gefahr von Erosion durch Heißgaseinwirkung.

Eine Konzentration des Reaktionscoatingmaterials nimmt vorzugsweise von einer Oberfläche des keramischen Hitzeschildes in die Tiefe der Oberflächenschicht ab. Dadurch bildet sich ein Übergang zwischen dem Reaktionscoatingmaterial hin zu dem Basismaterial des Keramikkörpers, was vorteilhaft ist, weil der Heißgasangriff von der Oberfläche des keramischen Hitzeschildes her erfolgt. Insbesondere bildet sich keine Grenzschicht zwischen dem Reaktionscoatingmaterial (YAG) und dem Basismaterial des Keramikkörpers (Aluminiumoxid), die unerwünschte Spannungen oder Inhomogenitäten bewirken könnte.

Die Oberflächenschicht besitzt vorzugsweise eine Dicke von wenigstens 400 Mikrometern. Geringere Tiefen führen zu einem reduzierten Schutz des Keramikkörpers des Hitzeschildes.

Die Oberflächenschicht kann sich über eine Stirnfläche des Keramikkörpers und über Seitenflächen des Keramikkörpers erstrecken. Dies stellt einen weiteren besonderen Vorteil der erfindungsgemäß hergestellten gegenüber herkömmlichen Beschichtungen dar, weil diese einen Auftrag von typischerweise 200 bis 400 Mikrometern Beschichtungsmaterial bedingen, wodurch eine Beschichtung zwischen benachbarten keramischen Hitzeschilden wegen der durch die Beschichtung veränderten Abmessungen der Hitzeschilde bislang nicht gangbar war. Der zur Herstellung des Hitzeschilds aufzubringende yttriumhaltige Reaktionscoatingbildner dringt hingegen in den Keramikkörper des Hitzeschildes ein und durchsetzt die Oberflächenschicht, wodurch die Abmessungen des keramischen Hitzeschildes unverändert bleiben und auch die sporadisch eindringendem Heißgas ausgesetzten Seitenflächen des keramischen Hitzeschildes geschützt werden können.

Weiterhin offenbart ist eine Gasturbine mit einem erfindungegsmäß hergestellten erfindungsgemäßen keramischen Hitzeschild.

Die Erfindung führt zum Verfahren zur Herstellung eines verbesserten keramischen Hitzeschildes für eine Gasturbine. Das Verfahren besitzt wenigstens die folgenden Schritte:
-- Bereitstellen eines aluminiumoxidhaltigen Keramikkörpers; und
-- Erzeugen einer Oberflächenschicht des Keramikkörpers, die Yttriumaluminiumgranat als Reaktionscoatingmaterial enthält.

Erfindungsgemäß wird dabei ein Yttriumnitrat enthaltender Reaktionscoatingbildner verwendet.

Mit dem erfindungsgemäßen Herstellungsverfahren kann ein keramischer Hitzeschild für eine Gasturbine mit verlängerter Lebensdauer hergestellt werden. Das Reaktionscoatingmaterial Yttriumaluminiumgranat ist besonders heißgasresistent und bedeckt die vom Heißgas erreichbaren Oberflächen des Keramickörpers, so dass das während des Betriebs in der Gasturbine strömende Heißgas nicht oder nahezu nicht den keramischen Hitzeschild erodieren kann. Besonders bevorzugt umfasst das Erzeugen der Yttriumaluminiumgranat enthaltenden Oberflächenschicht einen Schritt eines Auftragens eines flüssigen Reaktionscoatingbildners auf den Keramikkörper. Der Reaktionscoatingbildner kann beispielsweise eine Lösung, eine Sole oder eine Suspension sein. Der Yttriumnitrat enthaltende Reaktionscoatingbildner kann mit in dem Keramikkörper vorhandenen Al₂O₃ ein YAG wie Y₃Al₅O₁₂ ausbilden. Das YAG stellt das durch die Reaktion des Reaktionscoatingbildners und des keramischen Materials erzeugte Reaktionscoatingmaterial dar.

Vorteilhaft kann der yttriumhaltige Reaktionscoatingbildner in den Keramikkörper eindringen, so dass die YAG enthaltende Oberflächenschicht als Teil des Keramikkörpers ausgebildet wird und sich die Abmessungen des Keramikkörpers nicht verändern. Somit kann eine Ausbildung der schützenden Oberflächenschicht auch an den Stirnflächen des Hitzeschilds erfolgen, was bislang aufgrund der sich durch das Aufbringen einer Beschichtung ergebenden Änderung der Abmessungen nicht möglich war. Das erfindungsgemäße Verfahren kann dadurch einfach in bestehende Produktionsprozesse eingebunden werden, da keine Veränderung der Abmessungen berücksichtigt werden muss.

Eine solche YAG-Phase ist im Vergleich zu anderen Feuerfestwerkstoffen praktisch unempfindlich gegenüber Heißgas und kann so die Oberfläche des keramischen Hitzeschildes dauerhaft vor einem Heißgasangriff schützen. Die Eindringtiefe des Reaktionscoatingbildners kann durch dessen Viskosität beeinflusst werden. Ebenso kann die Konzentration des derart erzeugten Reaktionscoatingmaterials in der Oberflächenschicht des keramischen Hitzeschildes über den entsprechenden Gehalt im Reaktionscoatingbildner eingestellt werden.

Das Erzeugen der Yttriumaluminiumgranat enthaltenden Oberflächenschicht kann ferner einen Schritt eines Sinterns oder Cosinterns des Keramikkörpers nach dem Auftragen des flüssigen Reaktionscoatingbildners umfassen. Durch das Sintern reagiert der Reaktionscoatingbildner mit dem Aluminiumoxid des Keramikkörpers und bildet so die Yttriumaluminiumgranat enthaltende Oberflächenschicht aus.

Der Schritt des Sinterns kann vorteilhaft einem bisher bereits für die Herstellung von keramischen Hitzeschilden verwendeten Brennen entsprechen. Das heißt, dass bekannte Fertigungsverfahren für keramische Hitzeschilde um einen vor dem Brennen des keramischen Hitzeschildes ausgeführten Schritt des Auftragens des flüssigen Reaktionscoatingbildners einfach erweitert werden können, wobei die bislang verwendeten Werkzeuge und Verfahren ansonsten unverändert weiterverwendet werden können. Das Sintern kann daher als sog. Cosintern ausgeführt werden, wobei neben der Bildung des YAG mittels Sintern auch ein Sintern des Basismaterials des Keramikkörpers stattfindet.

Das Sintern oder Cosintern des Keramikkörpers kann bei einer Temperatur von wenigstens 650 Grad Celsius, vorzugsweise bei wenigstens 1500 Grad Celsius, erfolgen. Allgemein sind Temperaturen oberhalb von etwa 650 Grad Celsius anwendbar, wobei derart niedrige Temperaturen feine Aufmahlungsgrade der Reaktanten voraussetzen. Um geringe Fertigungskosten zu gewährleisten, wird jedoch die Verwendung eines verhältnismäßig grobkörnigen keramischen Materials für den Keramikkörper vorgeschlagen, was die genannte höhere Temperatur für das Sintern bzw. Cosintern bedingt. Bei der Fertigung von keramischen Hitzeschilden sind Brenntemperaturen oberhalb von 1500 Grad Celsius üblich, so dass diese herkömmlichen Brennvorgänge unverändert die Anforderungen des erfindungsgemäßen Verfahrens erfüllen.

Der flüssige Reaktionscoatingbildner kann beispielsweise auf den Keramikkörper aufgesprüht oder aufgepinselt werden. Ebenso kann der Keramikkörper in den flüssigen Reaktionscoatingbildner eingetaucht werden. Ein Sprühverfahren ist technisch leicht umzusetzen und erzielt auf ebenen Oberflächen einen gleichmäßigen Auftrag des flüssigen Reaktionscoatingbildners. Bei unebenen Oberflächen beispielsweise im Nutbereich erzielt dieses Verfahren einen eher ungleichmäßigen Auftrag, so dass hier ein Aufpinseln des flüssigen Reaktionscoatingbildners bevorzugt wird. Allgemein ist es vorteilhaft, das Applikationsverfahren auf die jeweils zu behandelnde Oberfläche abzustimmen.

Das Auftragen des flüssigen Reaktionscoatingbildners kann bei Unterdruck erfolgen, wodurch ein tieferes Eindringen des Reaktionscoatingbildners in den Keramikkörper unterstützt wird. Der Schritt des Bereitstellens des Keramikkörpers kann Schritte eines Anmischens einer Keramikkörperrohmasse, eines Formgebens, eines Abbindens und einer Trocknung umfassen. Dies entspricht gängigen Produktionsschritten für herkömmliche keramische Hitzeschilde, so dass vorhandene Herstellungsprozesse einfach für die Erfindung angepasst werden können.

### Kurzbeschreibung der Figuren

Die Erfindung wird nachfolgend anhand von Abbildungen von Ausführungsbeispielen näher erläutert. Es zeigen:
Figur 1 eine beispielhafte Gasturbine 100 in einem Längsteilschnitt;
Figur 2 eine Brennkammer 110 einer Gasturbine; und
Figur 3 ein Ausführungsbeispiel eines erfindugegemäß hergestellten Hitzeschildes 155.

### Ausführliche Figurenbeschreibung

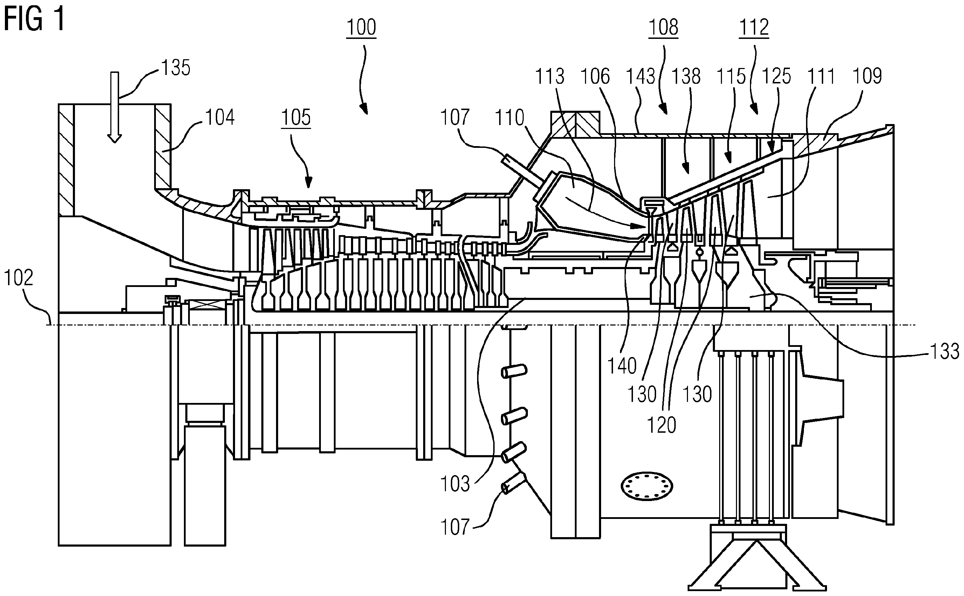

Die Figur 1 zeigt beispielhaft eine Gasturbine 100 in einem Längsteilschnitt. Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden keramischen Hitzeschilden am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufeln 120, 130 können Beschichtungen gegen Korrosion oder Oxidation aufweisen, z. B. MCrAlX (M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium (Hf)). Solche Legierungen sind bekannt aus der EP 0 486 489 B1, EP 0 786 017 B1, EP 0 412 397 B1 oder EP 1 306 454 A1.

Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Die Wärmedämmschicht bedeckt vorzugsweise die gesamte MCrAlX-Schicht.

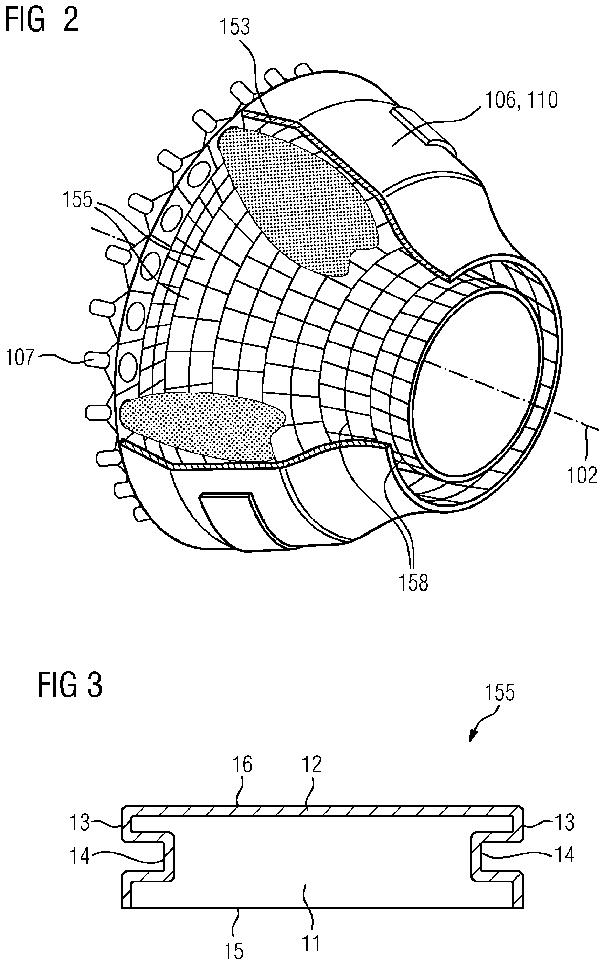

Die Figur 2 zeigt eine Brennkammer 110 einer Gasturbine. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000 Grad Celsius bis 1600 Grad Celsius ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus keramischen Hitzeschilden 155 gebildeten Innenauskleidung versehen.

Aufgrund der hohen Temperaturen im Inneren der Brennkammer 110 kann für die Hitzeschildelemente 155 bzw. für deren Halteelemente ein Kühlsystem vorgesehen sein.

Figur 3 zeigt ein Ausführungsbeispiel eines erfindugegemäß hergestellten keramischen Hitzeschildes 155. Der Hitzeschild 155 ist in einer Querschnittszeichnung dargestellt und weist lediglich beispielhaft an seinen beiden gegenüberliegenden Seitenflächen 13 jeweils eine Nut 14 auf, die dazu vorgesehen ist, als Aufnahme für eine hinter einer Rückseite 15 des Hitzeschilds 155 angeordnete metallische Halteklammer (nicht gezeigt) zu dienen. Die stromauf und stromab liegenden Seitenflächen des Hitzeschilds 155 sind gewöhnlich nicht mit Nuten ausgestattet. Der Hitzeschild 155 besitzt einen aluminiumoxidhaltigen Keramikkörper 11, der eine Oberflächenschicht 12 aufweist, die Yttriumaluminiumgranat als Reaktionscoatingmaterial enthält

Die Oberflächenschicht 12 erstreckt sich in dem gezeigten Beispiel über die Seitenflächen 13 und eine Stirnfläche 16 des keramischen Hitzeschildes 155, die im Betrieb dem Heißgas unmittelbar ausgesetzt ist. Die Oberflächenschicht 12 enthält heißgasresistentes YAG und bedeckt alle für das Heißgas erreichbaren Oberflächen des Keramikkörpers 11. Beispielsweise kann eine yttriumoxidhaltige Flüssigkeit als Reaktionscoatingbildner auf die Oberfläche des aluminiumoxidhaltigen Keramikkörpers aufgetragen werden. Bei einem anschließenden Cosintervorgang entsteht dann das YAG, sodass eine YAGhaltige Oberflächenschicht 12 ausgebildet wird.

Bei Ausführungsbeispielen der Erfindung mit dieser Materialkombination ergeben sich weitere Vorteile:
Wenn Yttrium mit Aluminiumoxid reagiert, vergrößert sich das Volumen des Korund-Kristallgitters geringfügig. Dies führt zu einer gewissen Druckspannung in der YAG enthaltenden Oberflächenschicht. Die so eingebrachte Druckspannung wirkt der beim Betrieb der Gasturbine auftretenden Verwölbung der Oberfläche des keramischen Hitzeschildes als Vorspannung entgegen. Beim Aufdomen des keramischen Hitzeschildes im Gasturbinenbetrieb muss daher erst die Druckspannung in der YAG enthaltenden Oberflächenschicht und dann die Zugfestigkeit des Materials überwunden werden, bevor es zu einer Rissbildung in der Oberflächenschicht kommen kann. Die YAG enthaltende Oberflächenschicht ist damit deutlich unempfindlicher gegenüber Rissbildung als bisherige Aluminacoatings, die aufgrund ihrer feinkörnigen Struktur und der damit verbundenen Nachsinteranfälligkeit (Schlickercoating) beziehungsweise der spröden Struktur (Flammcoating) eher unter Zugspannung stehen und damit verstärkt zur Rissbildung neigen. Solche Risse stellen jedoch eine erste Schwachstelle dar, die einen Heißgasangriff auf ungeschützte Bereiche des keramischen Hitzeschildes 155 erlauben und damit als Erosionsstarter fungieren können.

Obwohl die Erfindung im Detail durch bevorzugte Ausführungsbeispiele näher illustriert und erläutert wurde, ist die Erfindung nicht durch die offenbarten Beispiele beschränkt. Variationen hiervon können vom Fachmann abgeleitet werden, ohne den Schutzumfang der Erfindung, wie er in den nachfolgenden Ansprüchen definiert ist, zu verlassen.

## Patentansprüche

1. Ein Verfahren zur Herstellung eines keramischen Hitzeschildes (155) für eine Gasturbine (100) und mit den Schritten:
- Bereitstellen eines aluminiumoxidhaltigen Keramikkörpers (11); und
- Erzeugen einer Oberflächenschicht (12) des Keramikkörpers (11), die Yttriumaluminiumgranat als Reaktionscoatingmaterial enthält,
**dadurch gekennzeichnet,**
**dass** der Reaktionscoatingbildner Yttriumnitrat enthält.

2. Verfahren nach Anspruch 1,
bei dem das Erzeugen der Yttriumaluminiumgranat enthaltende Oberflächenschicht (12) einen Schritt eines Auftragens eines flüssigen Reaktionscoatingbildners auf den Keramikkörper (11) umfasst.

3. Verfahren nach Anspruch 2,
bei dem das Erzeugen einer Yttriumaluminiumgranat enthaltenden Oberflächenschicht(12) einen Schritt eines Sinterns oder Cosinterns des Keramikkörpers (11) nach dem Auftragen des flüssigen Reaktionscoatingbildners umfasst.

4. Verfahren nach Anspruch 3,
bei dem das Sintern oder Cosintern des Keramikkörpers (11) bei einer Temperatur von wenigstens 650 Grad Celsius, vorzugsweise von wenigstens 1500 Grad Celsius, erfolgt.

5. Verfahren nach einer der Ansprüche 2 bis 4,
bei dem der flüssige Reaktionscoatingbildner auf den Keramikkörper (11) aufgesprüht oder aufgepinselt wird oder bei dem der Keramikkörper (11) in den flüssigen Reaktionscoatingbildner eingetaucht wird.

6. Verfahren nach einer der Ansprüche 2 bis 5,
bei dem das Auftragen des flüssigen Reaktionscoatingbildners bei Unterdruck erfolgt.

7. Verfahren nach einer der Ansprüche 1 bis 6,
bei dem der Schritt des Bereitstellens des Keramikkörpers (11) Schritte eines Anmischens einer Keramikkörperrohmasse, eines Formgebens, eines Abbindens und einer Trocknung umfasst.

## Claims

1. Process for producing a ceramic heat shield (155) for a gas turbine (100) and having the steps of:
- providing an aluminium oxide-containing ceramic body (11); and
- producing a surface layer (12) of the ceramic body (11) containing yttrium aluminium garnet as reaction coating material,
**characterized in that**
the reaction coating former contains yttrium nitrate.

2. Process according to Claim 1,
in which the production of the yttrium aluminium garnetcontaining surface layer (12) comprises a step of applying a liquid reaction coating former to the ceramic body (11).

3. Process according to Claim 2,
in which the production of an yttrium aluminium garnetcontaining surface layer (12) comprises a step of sintering or co-sintering of the ceramic body (11) after the application of the liquid reaction coating former.

4. Process according to Claim 3,
in which the sintering or co-sintering of the ceramic body (11) is effected at a temperature of at least 650 degrees Celsius, preferably of at least 1500 degrees Celsius.

5. Process according to any of Claims 2 to 4,
in which the liquid reaction coating former is sprayed or brushed onto the ceramic body (11) or
in which the ceramic body (11) is dipped into the liquid reaction coating former.

6. Process according to any of Claims 2 to 5,
in which the liquid reaction coating former is applied under negative pressure.

7. Process according to any of Claims 1 to 6,
in which the step of providing the ceramic body (11) comprises steps of making up a ceramic body base mixture, shaping, setting and drying.

## Revendications

1. Procédé de fabrication d'un bouclier (155) thermique en céramique pour une turbine (100) à gaz et comprenant les stades:
- on se procure une pièce (11) en céramique contenant de l'oxyde d'aluminium; et
- on produit une couche (12) de surface de la pièce (11) en céramique, qui contient du grenat d'yttrium et d'aluminium comme matière de revêtement de réaction,
**caractérisé**
**en ce que** le générateur du revêtement de réaction contient du nitrate d'yttrium.

2. Procédé suivant la revendication 1,
dans lequel la production de la couche (12) de surface contenant du grenat d'yttrium et d'aluminium comprend un stade de dépôt d'un générateur de revêtement de réaction liquide sur la pièce (11) en céramique.

3. Procédé suivant la revendication 2,
dans lequel la production d'une couche (12) de surface contenant du grenat d'yttrium et d'aluminium comprend un stade de frittage ou de co-frittage de la pièce (11) en céramique après le dépôt du générateur de revêtement de réaction liquide.

4. Procédé suivant la revendication 3,
dans lequel le frittage ou le co-frittage de la pièce (11) en céramique s'effectue à une température d'au moins 650 degrés Celsius, de préférence d'au moins 1500 degrés Celsius.

5. Procédé suivant l'une des revendications 2 à 4,
dans lequel on pulvérise ou on dépose au pinceau le générateur de revêtement de réaction liquide sur la pièce (11) en céramique ou dans lequel on immerge la pièce (11) en céramique dans le générateur de revêtement de réaction liquide.

6. Procédé suivant l'une des revendications 2 à 5,
dans lequel le dépôt du générateur de revêtement de réaction liquide s'effectue en dépression.

7. Procédé suivant l'une des revendications 1 à 6,
dans lequel le stade dans lequel on se procure la pièce (11) en céramique comprend les stades d'un mélange d'une masse crue de pièce céramique, d'un façonnage, d'une prise et d'un séchage.
